# EUROPEAN PATENT APPLICATION

(11) **EP 2 824 575 A1**
(43) Date of publication of application: **14.01.2015**
(21) Application number: 12869584.8
(22) Date of filing: 23.08.2012
(51) Int. Cl.: G06F 12/00, G06F 17/30

(54) **DISTRIBUTED DATABASE SYSTEM**

(71) Applicant: WingArc1st Inc., Tokyo (JP)
(72) Inventor: ITO, Koji, Sapporo-shi Hokkaido 060-0808 (JP); KIMURA, Satoshi, Sapporo-shi Hokkaido 060-0808 (JP); HIZUME, Yohei, Sapporo-shi Hokkaido 060-0808 (JP)
(74) Representative: Vossius & Partner
(86) International application number: PCT/JP2012/071255
(87) International publication number: WO 2014/030235

(57) **Abstract**

Data of a distributed, compressed and restored index (D-CRX) related to a correspondence relation between a key value related to a registration request and NID, and data of a distributed and compressed result set cache (D-CRS) related to a correspondence relation between a distributed row identifier (RID) taking a unique value every column in a table constituting a distributed database and the NID are distributed and stored in each of slave nodes 15, 17 and 19. When the data of the D-CRX is to be distributed and stored in each of the slave nodes 15, 17 and 19, the same slave node as the slave node determined as a storage location for the data of the D-CRS is determined as a storage location of the data of the D-CRX in relation to the data of the D-CRX to which the same NID as the NID indicated by the data of the D-CRS is assigned.

## Description

### [Technical Field]

The present invention relates to a distributed database system including a master node for supervising a plurality of slave nodes and having such a structure as to distribute and store a key value in the slave nodes.

### [Background Art]

From a viewpoint of a physical arrangement of a node for carrying out a data processing, a centralized database and a distributed database are known as a database. As the distributed database for distributing and storing data, there is known a database including a master node for supervising a plurality of slave nodes and serving to distribute and store data on a key value to the slave nodes.

As an example of the distributed database, Cited Document 1 discloses a database managing device for combining horizontal and vertical distributions to distribute and store data. The database managing device includes a plurality of database devices having a hash function calculating section and a distributing function calculating section, and a global server having a load information collecting section and an access permission managing section. The global server statistically executes a data processing over load information, thereby determining an access permission including a database device having the lowest load and an access period to the database device. Access to the database devices is permitted based on the access permission to be determined by the global server.

[Patent Document 1] Japanese Laid-Open Patent Publication No. 2006 - 350741

### [Disclosure of the Invention]

Referring to the distributed database device according to the Patent Document 1 which joins horizontal and vertical distributions to distribute and store a key value in a plurality of nodes, however, respective key values are distributed and stored at random over a plurality of nodes without considering whether the key values have the same value or not. In the case in which a data manipulation is executed in the random distribution and storage, a time delay related to a communication which is generated between nodes is a bottleneck because the key values having the same value distributed and stored in the nodes are mutually referred to. Thus, it is hard to efficiently enhance a throughput of a whole system.

The present invention has been made to solve the problem and has an object to enable an efficient enhancement in a throughput of a whole distributed data system.

In order to solve the problem, in the present invention, data of distributed shared NID (DSN) related to a correspondence relation between a key value to be an actual value and a key value identifier (NID) taking a unique value within a range of a data type possessed by the key value in a whole distributed database is distributed and stored in each of slave nodes. When the data of the DSN is to be distributed and stored in each of the slave nodes, one of the slave nodes serving as a storage location is determined from the slave nodes based on a key value related to a registration request.

In the present invention, moreover, data of a distributed, compressed and restored index (D-CRX) related to a correspondence relation between the key value related to the registration request and the NID and data of a distributed and compressed result set cache (D-CRS) related to a correspondence relation between a distributed row identifier (RID) taking a unique value every column in a table constituting the distributed database and the NID are distributed and stored in each of the slave nodes. When the data of the D-CRX is to be distributed and stored in each of the slave nodes, the same slave node as the slave node determined as a storage location for the data of the D-CRS is determined as a storage location for the data of the D-CRX to which the same NID as NID indicated by the data of the D-CRS is assigned in relation to the data of the D-CRX.

According to the present invention which is constituted as described above, each of the slave nodes is operated to use the key value identifier (NID) obtained by referring to DSN distributed and stored in a self-node in place of the key value to be the actual value when executing a data manipulation such as a join operation based on a command sent from a master node in parallel. The key value identifier (NID) takes a unique value within a range of a data type possessed by the key value in the whole distributed database. In other words, the same key value takes a value of the same key value identifier (NID). On the other hand, a storage location for the data of the distributed shared NID (DSN) as information about the key value is determined based on the key value. Consequently, information about the same key value is collected into the same slave node.

In brief, in the present invention, the information about the same key value is intentionally distributed and stored so as to be collected into the same slave node. In contrast to the conventional example in which a key value having the same value is distributed and stored across the slave nodes at random, therefore, a communication between the slave nodes for mutually referring to the key value having the same value is not generated at all in the case in which a certain one of the slave nodes executes a data manipulation such as a join operation, for instance. Consequently, it is possible to suppress the overhead of a processing as the whole system.

According to the present invention, moreover, in the case in which the certain slave node executes the data manipulation such as the join operation, the data of the key value indicated to correspond to the NID by the data of the D-CRX is also held in the self-node if the data of the NID is held in the self-node. Therefore, a communication between the slave nodes for obtaining the data of the key value is generated with difficulty. Accordingly, it is possible to suppress the overhead of the processing as the whole system.

According to the present invention, therefore, it is possible to efficiently enhance a throughput of a whole distributed database system.

### [Brief Description of the Drawings]

Fig. 1 is a diagram showing an overview of a structure of a distributed database system according to an embodiment of the present invention.
Fig. 2A is a table showing an example of a transaction of a sales management table in first to third slave nodes.
Fig. 2B is a table showing an example of the transaction of the sales management table in the first to third slave nodes.
Fig. 3A is a diagram showing an example of distributed shared NID (DSN).
Fig. 3B is a diagram showing an example of a distributed, compressed and restored index (D - CRX).
Fig. 3C is a diagram showing an example of a distributed and compressed result set cache (D - CRS).
Fig. 3D is a diagram showing an example of a distributed row identification index (D - RIX).
Fig. 4 is a functional block diagram showing internal structures of a master node and a first slave node.
Fig. 5A is a flow chart showing a cooperating operation of the master node and the slave node in the case in which a registration request for data of DSN is given.
Fig. 5B is a flow chart showing the cooperating operation of the master node and the slave node in the case in which a registration request for data of D-RIX is given.
Fig. 5C is a flow chart showing the cooperating operation of the master node and the slave node in the case in which a registration request for data of D-CRS is given.
Fig. 5D is a flow chart showing the cooperating operation of the master node and the slave node in the case in which a registration request for data of D-CRX is given.
Fig. 6 is a process chart showing a flow of a distributed query processing to be executed by the distributed database system according to the present embodiment.
Fig. 7 is a table (an inner table) showing the number of customers for an individual area to be distributed and stored in a plurality of local nodes.
Fig. 8 is a diagram showing an example of D-RIX in the inner table illustrated in Fig. 7.
Fig. 9 is a table showing an RID cross reference representing a correspondence relation between an outer table RID and an inner table RID.

### [Best Mode for Carrying Out the Invention]

A distributed database system according to an embodiment of the present invention will be described below in detail with reference to the drawings.

### (Overview of Distributed Database System according to Embodiment of the Present Invention)

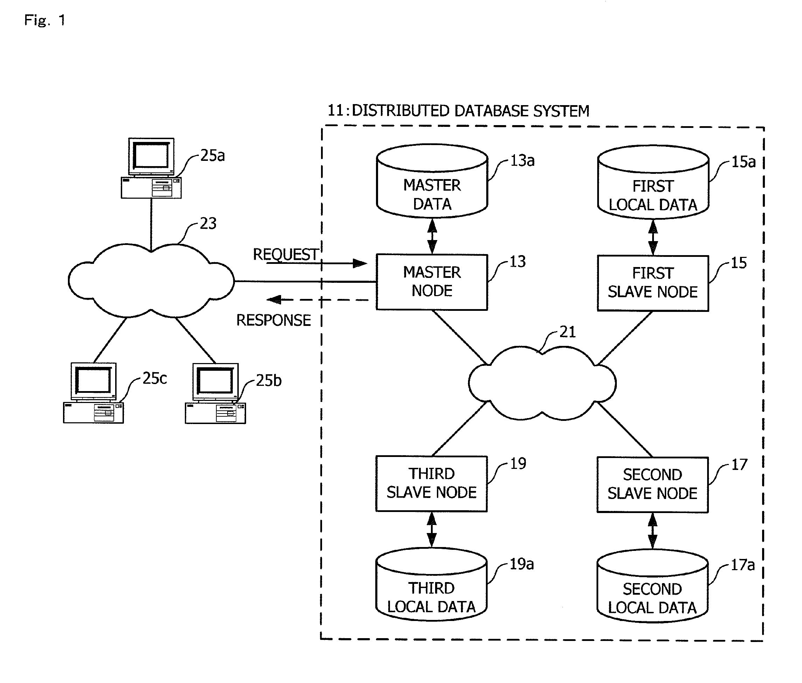

First of all, description will be given to an overview of a distributed database system according to an embodiment of the present invention. Fig. 1 is a diagram showing an overview of a structure of the distributed database system according to the embodiment of the present invention. A system 11 of a distributed relational database ("relational database" will be referred to as "RDB" and "database" will be referred to as "DB" in principle) according to the present embodiment has a structure in which a single master node 13 and first to third slave nodes 15, 17 and 19 are connected through a first communication network 21. The master node 13 supervises the slave nodes 15, 17 and 19. The nodes 13, 15, 17 and 19 are computers having an information processing function.

As components other than the distributed RDB system 11, a plurality of client terminals 25a, 25b and 25c are connected to the master node 13 through a second communication network 23. When accepting a key value registration request given by one of the client terminals 25a, 25b and 25c or a data manipulation request such as a table join manipulation, the master node 13 executes a processing following the request in cooperation with the first to third slave nodes 15, 17 and 19 and returns, as a response, a result of the processing which is obtained to the client terminal giving the request.

The master node 13 has a master data storing section 13a for storing master data. The master data is constituted to include DB metadata and DB management data. The DB metadata includes a physical configuration list related to the numbers of the slave nodes 15, 17 and 19 and places where they are provided, a configuration list for a table attributes, and the like. The DB management data includes shared management data such as the latest shared NID which will be described below. As a main feature of the present invention, the master node 13 carries out only a management for distributing and storing information about a key value for specifying the key value which includes a key value to be an original management target in the first to third slave nodes 15, 17 and 19, and neither of the master node 13 itself and the master data storing section 13a do not hold the key value or the information about the key value.

The first to third slave nodes 15, 17 and 19 have first to third local data storing sections 15a, 17a and 19a for storing first to third local data, respectively. Structures of the first to third slave nodes 15, 17 and 19 and the first to third local data storing sections 15a, 17a and 19a are equal in a row. In order to avoid repetition of description, therefore, the first slave node 15, the first local data and the first local data storing section 15a will be explained typically in place of explanation of the second and third slave nodes 17 and 19, the second and third local data, and the second and third local data storing sections 17a and 19a. The first to third local data storing sections 15a, 17a and 19a correspond to a DSN storing section, a D-CRX storing section, a D-CRS storing section and a D-RIX storing section, respectively.

The first local data is constituted to include four types of index data. In other words, the index data indicate first distributed shared NID (which will be hereinafter referred to as "DSN"), a first distributed, compressed and restored index (which will be hereinafter referred to as "D-CRX"), a first distributed and compressed result set cache (which will be hereinafter referred to as "D-CRS"), and a first distributed row identifying index (which will be hereinafter referred to as "D-RIX"). These will be described below in detail.

### (Example of Transaction of Sales management table in Slave Nodes)

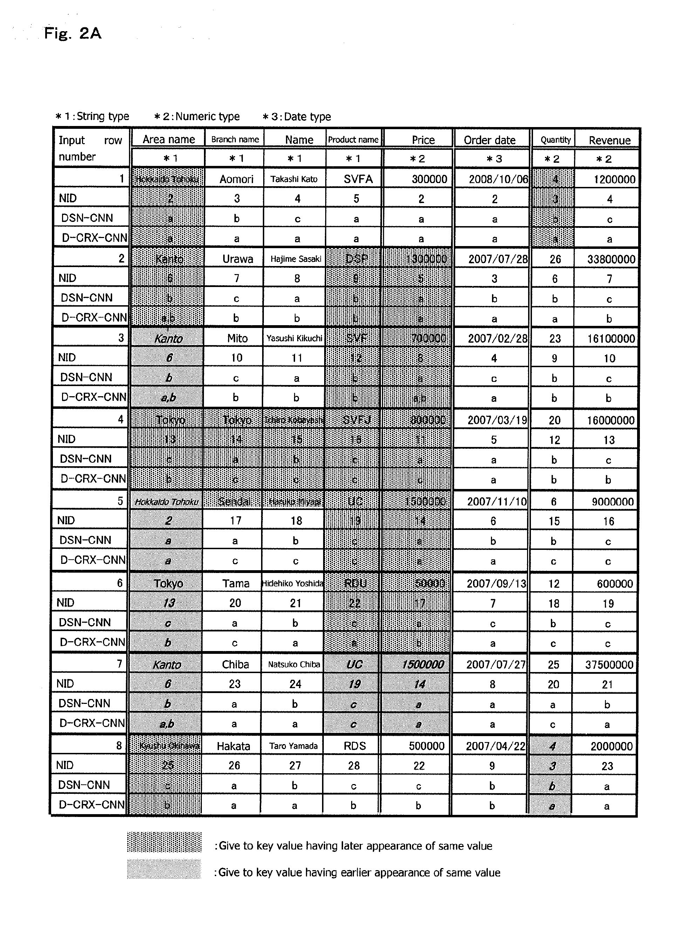

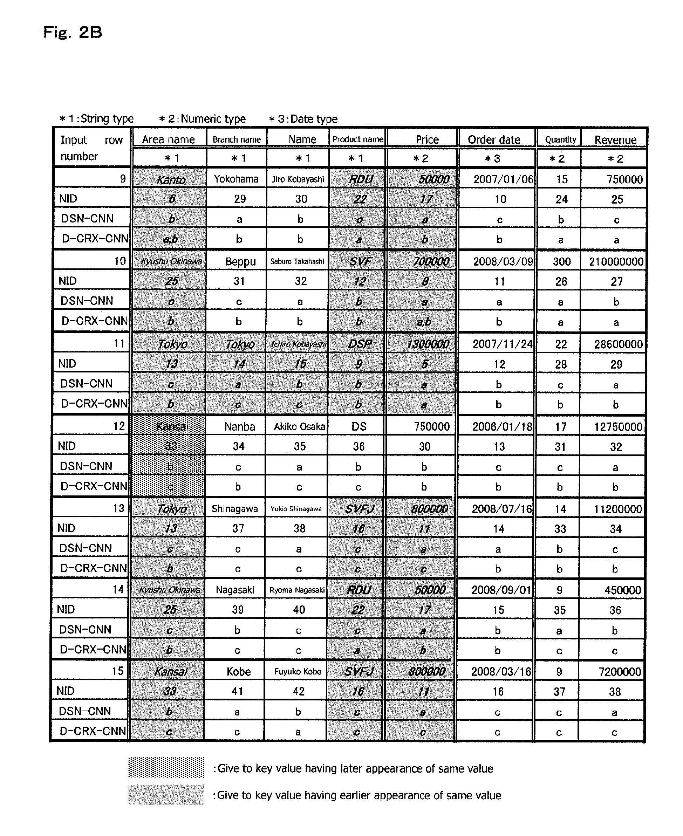

Description will be given to an example of transactions of sales management tables in the slave nodes 15, 17 and 19 which are generated by the distributed RDB system 11 according to the embodiment of the present invention. Figs. 2A and 2B are tables showing an example of the transactions of the sales management tables in the slave nodes 15, 17 and 19.

When table data having a tuple (a row) and a column disposed two-dimensionally shown in Figs. 2A and 2B are input, the distributed RDB system 11 creates four types of index data of a distributed relational data model. An input row number shown in each of Figs. 2A and 2B is a sign for uniquely identifying an input row and is assigned in a serial number in ascending order from one. The input row number is a sign given by the master node 13 and is not given to actual input data.

An item name of a column is entered in a first row of the table shown in each of Figs. 2A and 2B and a kind of a data type (for instance, a string type, a numeric type, a date type or the like) is entered in a second row of the same table. In the tables shown in Figs. 2A and 2B, 1 to 15 are assigned as input row numbers to the respective tuples. In the tables shown in Figs. 2A and 2B, "a distributed row identifier taking a unique value for each column in a table constituting a distributed database (which will be hereinafter referred to as "RID") described in claims has an equal value to the input row number.

In the tables shown in Figs. 2A and 2B, an attribute value of each tuple is entered in a field in a lower stage of each tuple. However, the attribute value of each tuple is entered for convenience of the description and is not included in the actual input data. For instance, the attribute value includes a key value identifier output by referring to data of the DSN with the key value set to be an input (which will be hereinafter referred to as "NID"), a storage location node number of the data of the DSN which is determined by Consistent hashing (which will be hereinafter referred to as "DSN-CNN"), and a storage location node number of data of the D-CRX which is determined by a method to be described below (which will be hereinafter referred to as "D-CRX-CNN"). The NID, DSN, DSN-CNN and D-CRX-CNN will be described below in detail.

In the tables shown in Figs. 2A and 2B, the number of storage location nodes is set to be three distributions corresponding to the number of the first to third slave nodes 15, 17 and 19. a to c are attached as identifies of CNN to the first to third slave nodes 15, 17 and 19, respectively. In other words, on the assumption that the first slave node 15 corresponds to a storage location node of CNN = a, the second slave node 17 corresponds to a storage location node of CNN = b, and the third slave node 19 corresponds to a storage location node of CNN = c, subsequent description will be given. In the following description, a symbol {i, j, k} enclosing an element with braces {} indicates a set having i, j and k as elements.

A member of a set of values to be management targets (which will be hereinafter referred to as a "value set") is referred to as a key value. NID is a sign for uniquely identifying the key value. The NID is assigned to a key value related to a registration request in the whole distributed database to take a unique value within a range of a data type possessed by each key value.

In brief, the same NID is assigned to a key value having the same value. This will be verified in the tables shown in Figs. 2A and 2B. In a tuple having an input row number of "1" in Fig. 2A, "2" is assigned as the NID to "Hokkaido and Tohoku" to be a key value entered as an area name of a column. In a tuple having an input row number of "5" in Fig. 2A, moreover, "2" is assigned as the NID to the "Hokkaido and Tohoku" to be the key value entered as the area name of the column in the same manner as the example of the tuple having the input row number of "1". In the tables shown in Figs. 2A and 2B, mutually different half-tone dot meshing decorations are given to the two former entry frames in order to identify, a key value having the same value appearing later, a key value having the same value appearing earlier and a key value which does not correspond to them.

It is preferable that the NID should take a value of a natural number. The reason is as follows. When carrying out a data manipulation such as a table join manipulation by using the NID in place of a key value, it is possible to reduce a processing load related to the operation and to increase a speed of an operation processing. The details of the reason will be described below. Moreover, it is preferable that the NID should take a value of an ordinal number. The reason is that it is possible to output the NID uniquely to the key value related to the registration request in a very simple procedure in which a value of the latest shared NID is incremented. In the tables shown in Figs. 2A and 2B, NID = 0, NID = 1 and NID = 2 or more are defined as an invalid value, a NULL value and a valid value, respectively.

For a distributing method for distributing information about a key value (DSN, D-CRX, D-CRS and D-RIX) to the slave nodes 15, 17 and 19, it is possible to employ well-known Consistent hashing, for instance. However, it is possible to employ, without a restriction to the Consistent hashing, any method capable of distributing information about a key value again at a sufficiently small cost when the slave node (storage location node) is increased/decreased.

### (Example of DSN)

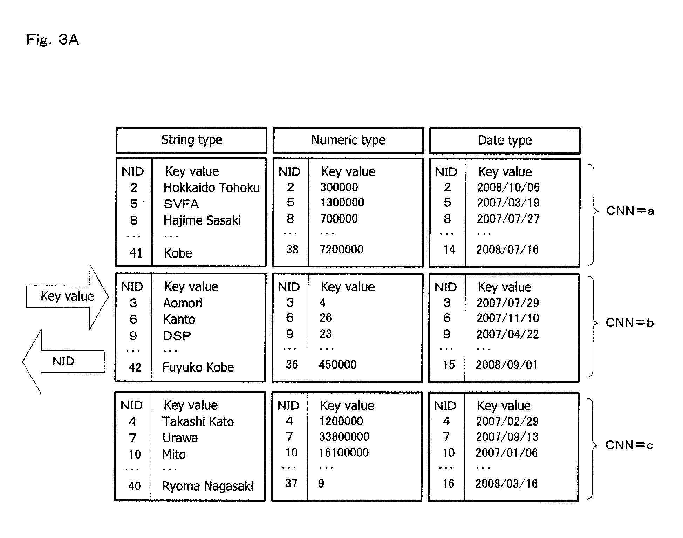

Next, description will be given to an example of the DSN to be generated in the distributed RDB system 11 according to the embodiment of the present invention. Fig. 3A shows index data representing an example of the DSN. The DSN indicates an index of the distribution and storage of the NID into the slave nodes 15, 17 and 19 through the Consistent hashing using a key value as a distribution key and is referred to when corresponding NID is to be obtained by using the key value as an input.

Detailed description will be given. The DSN is an index related to a correspondence relation between a key value related to a registration request and NID assigned to the key value. The DSN is separately stored every data type possessed by the key value related to the registration request. According to the index of the DSN, it is possible to obtain corresponding NID by using the key value as an input.

The DSN is generated in accordance with the following rules as shown in Fig. 3A.
(1) Common NID is given to a set of the same key values of the same data type within a range of the whole distributed database.
(2) A pair of the key value and the NID is distributed and stored into the slave nodes 15, 17 and 19 (a value of DSN-CNN is a to c) by the Consistent hashing using a key value as a distribution key.
(3) A management unit of the DSN is a distributed database.

### (Example of D-CRX)

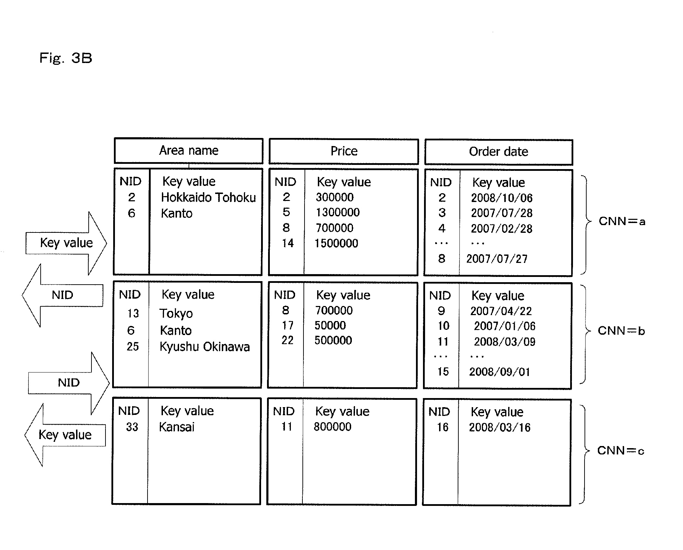

Next, description will be given to an example of the D-CRX to be generated in the distributed RDB system 11 according to the embodiment of the present invention. Fig. 3B shows an example of the D-CRX in the case in which three columns, that is, an area name, a price and an order date are extracted. The D-CRX is an index for the distribution and storage of NID in the slave nodes 15, 17 and 19, and is used when examining corresponding NID in a retrieval of a key value or reversely converting the NID into the key value.

Detailed description will be given. The D-CRX is an index related to a one-to-one correspondence relation between a key value related to a registration request and NID assigned to the key value. The D-CRX is separately stored every column to which the key value related to the registration request belongs. According to the index of the D-CRX, it is possible to obtain a corresponding key value by using the NID as an input and to obtain corresponding NID by using the key value as an input. The DSN and the D-CRX are different from each other in that the key value is converted into the NID in a one-way direction in the DSN, while the key value and the NID are converted in a two-way direction in the D-CRX. According to the index of the D-CRX, moreover, it is possible to obtain a corresponding NID set with a value range of the key value (an start value and an end value) used as an input (a value range retrieval). The value range retrieval will be described below.

The D-CRX is generated in accordance with the following rules as shown in Fig. 3B.
(1) A one-to-one correspondence relation between the key value and the NID is given by using, as a management unit, the same column in the same table in the distributed database.
(2) A pair (one-to-one correspondence) of the NID and the key value is distributed and stored in the slave nodes 15, 17 and 19 (storage location nodes ; "a value of the D-CRX-CNN is a to c) in such a manner that a storage location for data of the D-CRX to which the same NID as NID indicated by data of D-CRS is assigned is the same slave node as the slave node determined as a storage location for the data of the D-CRS.
(3) A management unit of the D-CRX is a column.

### (Example of D-CRS)

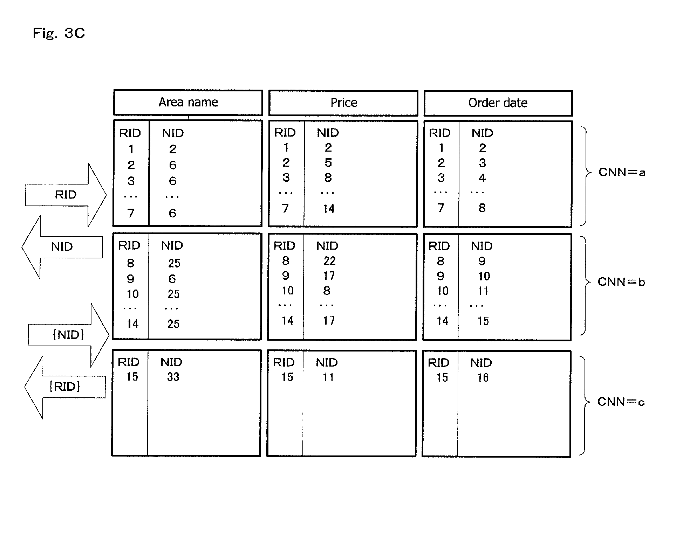

Next, description will be given to an example of the D-CRS to be generated by the distributed RDB system 11 according to the embodiment of the present invention. Fig. 3C shows an example of the D-CRS in the case in which three columns, that is, an area name, a price and an order date are extracted. The D-CRS is an index for the distribution and storage of the NID in the slave nodes 15, 17 and 19 through the Consistent hashing using a function of the RID (including the RID itself) as a distribution key, and is used when an RID set serving as a search result is to be created or a tuple serving as a join result is to be created.

Detailed description will be given. The D-CRS is an index related to a correspondence relation between the RID and the NID which take unique values every column in the tuple constituting the distributed database. The D-CRS is separately stored every column to which the key value related to the registration request belongs. Referring to the D-CRS, the correspondence relation between the RID and the NID is described in one-to-one, and there is employed a data structure for permitting a repetitive appearance of the NID in the same column. According to the D-CRS, it is possible to obtain corresponding NID by using the RID as an input. Moreover, it is possible to acquire a corresponding RID set (written in {RID}) by using an NID set (written in {NID}) as an input. In other words, by repetitively carrying out a full-scan for fully collating NID to be a search target with all of NIDs belonging to the column by the member number of NID sets, it is possible to obtain the RID set corresponding to the NID set.

The D-CRS is generated in accordance with the following rules as shown in Fig. 3C.
(1) The NID corresponding to the RID is stored on the same column unit in the distributed database. This is referred to as a line unit NID array.
(2) A block number (D-CRS-BN) to be used for determining D-CRS-CNN is a quotient obtained through a division of the RID by a blocking coefficient (D-CRS-BF). By the expression, it is apparent that the D-CRS-BN is a function of the RID.
(3) The D-CRS-BF to be used for determining the D-CRS-BN is a constant and takes a value of an optional positive integer ("7" in the present example). For this reason, the D-CRS-BN takes a value of a positive integer.
(4) By the Consistent hashing using the D-CRS-BN (the function of the RID) as a distribution key, the line unit NID array is distributed and stored in the slave nodes 15, 17 and 19 (storage location nodes for the data of the D-CRS ; a value of the D-CRS-CNN is a to c).
(5) A management unit of the D-CRS is a column.

### (Example of D-RIX)

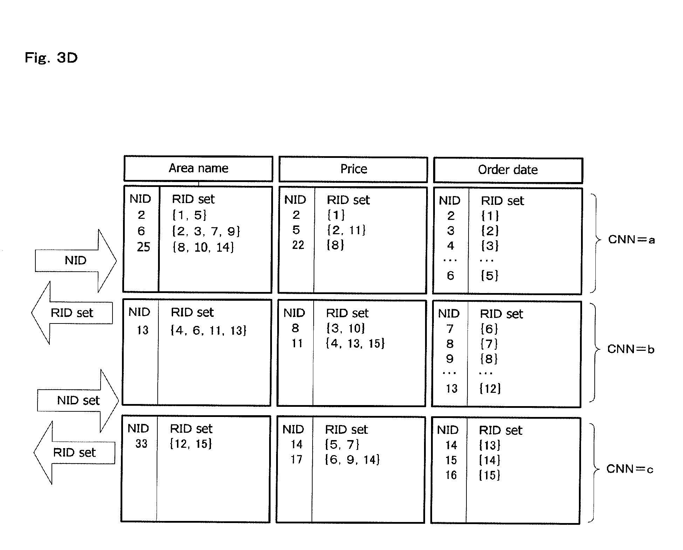

Next, description will be given to an example of the RIX to be generated in the distributed RDB system 11 according to the embodiment of the present invention. Fig. 3D shows an example of the D-RIX in the case in which three columns, that is, an area name, a price and an order date are extracted. The D-RIX is an index for the distribution and storage of NID in the slave nodes 15, 17 and 19 by the Consistent hashing using the function of the NID (including the NID itself) as a distribution key, and is used when examining corresponding RID in a retrieval of a key value in a table join manipulation.

Detailed description will be given. The D-RIX is an index related to a one-to-N correspondence relation between the NID and the RID set. The D-RIX is separately stored every column to which the key value related to the registration request belongs. The D-CRS and the D-RIX are different from each other in that a repetitive appearance of the NID might occur in the same column in the D-CRS, while the repetitive appearance of the NID could not occur in the same column in the D-RIX. The difference is derived from the fact that the D-CRS uses the RID as the distribution key, while the D-RIX uses the NID as the distribution key. According to an index of the D-RIX, it is possible to obtain a corresponding RID set by using the NID as an input and to obtain a corresponding RID set by using the NID set as an input. By carrying out a data manipulation such as a table join manipulation using the D-RIX, moreover, it is possible to suppress a movement of data among the slave nodes 15, 17 and 19 (the storage location nodes ; a value of the DSN-CNN is a to c) and to inhibit a full scan in a retrieval in the table join manipulation. The reason will be described below.

The D-RIX is generated in accordance with the following rules as shown in Fig. 3D.
(1) A correspondence relation between the NID and the RID set is given by using, as a management unit, the same column in the same table in the distributed database.
(2) A block number (D-RIX-BN) to be used for determining the DSN-CNN is a quotient obtained through a division of the NID by a blocking coefficient (D-RIX-BF). By the expression, it is apparent that the D-RIX-BN is a function of the NID.
(3) The D-RIX-BF to be used for determining the D-RIX-BN is a constant and takes a value of an optional positive integer ("7" in the present example). For this reason, the D-RIX-BN takes a value of a positive integer.
(4) By the Consistent hashing using the D-RIX-BN (a function of the NID) as the distribution key, a pair of the NID and the RID set (a one to N correspondence) is distributed and stored in the slave nodes 15, 17 and 19 (the storage location nodes ; a value of the DSN-CNN is a to c).
(5) A management unit of the D-RIX is a column.

### (Internal Structure of Master Node and First Slave Node)

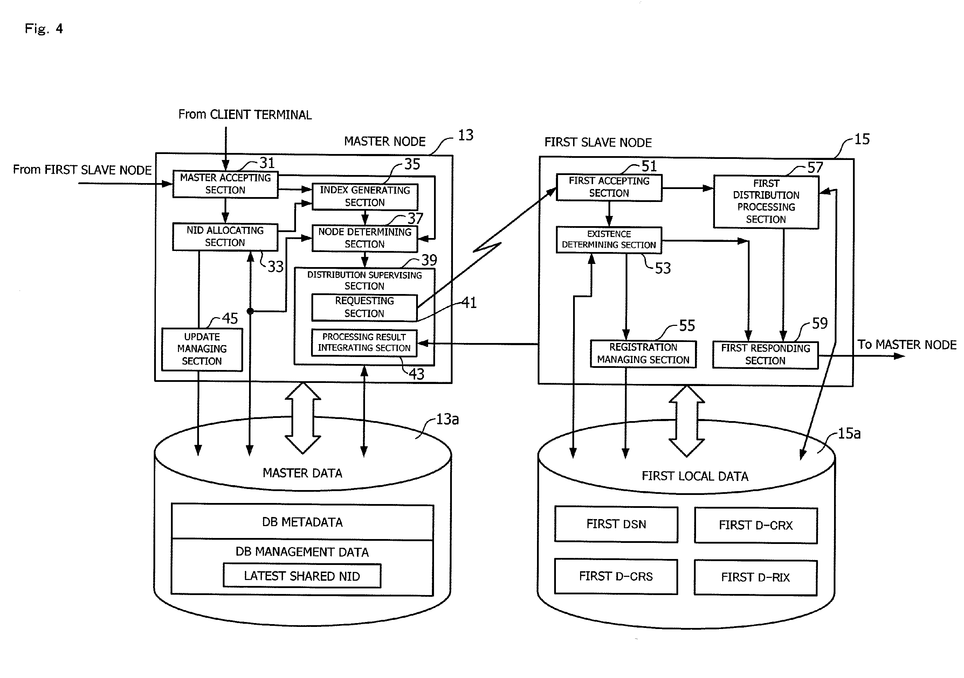

Next, description will be given to internal structures of the master node 13 and the first slave node 15 which play an important role in the distributed RDB system 11 according to the present embodiment. Fig. 4 is a functional block diagram showing the internal structures of the master node 13 and the first slave node 15.

First of all, the internal structure of the master node 13 will be described. The master node 13 includes a mater accepting section 31, an NID allocating section 33, an index generating section 35, a node determining section 37, a distribution supervising section 39 having a requesting section 41 and a processing result integrating section 43, and an update managing section 45.

The master accepting section 31 which is equivalent to a registration request accepting section accepts a key value related to a registration request and information about a data type thereof. Actually, a key value registration request is generally input to the master accepting section 31 on a tuple unit to which respective key values and information about a data type thereof are related every columns. However, the key value registration request is input in a configuration of table data constituted by a plurality of tuple sets in some cases. In any case, the master accepting section 31 accepting the input data on the tuple unit successively advances a processing by setting, as a minimum unit, a key value related to one of the columns included in the tuple (which will be hereinafter referred to as a "processing target key value") and information about a data type thereof. For this reason, in the present embodiment, description will be given on the assumption that the master accepting section 31 accepts a set of a processing target key value and information about a data type thereof which serve as the minimum unit.

The master accepting section 31 accepting the input data on the tuple unit gives common RID taking a unique value every column in a table to all of key values belonging to the tuple. It is preferable that the RID should take values of a natural number and an ordinal number in the same manner as NID. The reason is that unique RID can be given every column in the table in a very simple procedure for incrementing the latest value of the RID.

The master accepting section 31 accepts a key value registration request (including information about a data type thereof) issued from one of the client terminals 25a, 25b and 25c or a data manipulation request such as a table join manipulation. Moreover, the master accepting section 31 accepts an existence confirmation result transmitted from any of the slave nodes which will be described below. The master accepting section 31 transfers a key value registration request to the NID allocating section 33 when the request is given, and transfers a data manipulation request to the node determining section 37 when the request is given.

In the case in which a key value registration request is given, the NID allocating section 33 allocates unique NID to a key value related to the registration request by referring to the latest shared NID in DB management data stored in the master data storing section 13a. In the case in which the master accepting section 31 accepts an existence confirmation result (information indicating whether the key value related to the registration request has already been present in a storage location node thereof or not), moreover, the NID allocating section 33 generates the latest shared NID update control signal related to whether the latest shared NID is to be updated or not and sends the signal to the update managing section 45 based on the existence confirmation result.

In the case in which NID is assigned to a key value related to a registration request by the NID allocating section 33, the index generating section 35 generates data of the DSN, D-CRX, D-CRS and D-RIX data respectively based on the key value related to the registration request, a data type possessed by the key value, the NID assigned to the key value and RID given from the master node 13. The data of the DSN implies at least data on a minimum unit which serves as a component of the DSN (pair data including a single key value and single NID). Similarly, the D-CRX data implies at least data on a minimum unit which serves as a component of the D-CRX (pair data including a single key value and single NID), the data of the D-CRS implies at least data on a minimum unit which serves as a component of the D-CRS (pair data including single RID and single NID), and the data of the D-RIX implies at least data on a minimum unit which serves as a component of the D-RIX (pair data including single NID and a group of RID sets). Reference is made to four types of index data thus generated when a node is to be determined or when a data manipulation request such as a table join manipulation is given as will be described below, for instance. The index generating section 35 is equivalent to a DSN generating section, a D-CRX generating section, a D-CRS generating section and a D-RIX generating section.

In the case in which the key value registration request is given, the node determining section 37 determines any of the slave nodes which serves as a distribution storage locations for the data of the DSN, the D-CRX, the D-CRS and the D-RIX which are generated by the index generating section 35. At this time, the data of the DSN, the D-CRS and the D-RIX are determined by the Consistent hashing using one of a key value, a function of NID and a function of RID as a distribution key. Referring to the data of the D-CRX, moreover, a distribution storage location is determined in such a manner that a storage location for the data of the D-CRX to which the same NID as NID indicated by the data of the D-CRS is assigned is the same slave node as a slave node determined as the storage location for the data of the D-CRS. The node determining section 37 is equivalent to a DSN storage node determining section, a D-CRX storage node determining section, a D-CRS storage node determining section and a D-RIX storage node determining section.

In the case in which the data manipulation request such as the table join manipulation is given, the node determining section 37 determines all of the first to third slave nodes 15, 17 and 19 under the control of the master node 13 as nodes for carrying out a distribution processing over the data manipulation request. Consequently, the first to third slave nodes 15, 17 and 19 execute the given data manipulation request in parallel. A procedure for carrying out the distribution processing over the data manipulation request by the first to third slave nodes 15, 17 and 19 will be described below in detail.

In the case in which the key value registration request is given, the requesting section 41 belonging to the distribution supervising section 39 sends the data of the DSN, D-CRX, D-CRS and D-RIX to any of the first to third slave nodes 15, 17 and 19 under the control of the master node 13 which is determined by the node determining section 37 respectively and issues the data registration request. In the case in which the data manipulation request is given, moreover, the requesting section 41 issues a processing request to any of the first to third slave nodes 15, 17 and 19 which is determined by the node determining section 37. The requesting section 41 is equivalent to a DSN registration requesting section, a D-CRX registration requesting section, a D-CRS registration requesting section and a D-RIX registration requesting section.

Upon receipt of data manipulation results obtained by the distribution processing through the first to third slave nodes 15, 17 and 19 respectively, the processing result integrating section 43 belonging to the distribution supervising section 39 integrates these processing results.

The update managing section 45 controls the update of the latest shared NID in DB management data in accordance with the latest shared NID update control signal transmitted from the NID allocating section 33. More specifically, the update managing section 45 controls to update the latest shared NID into next shared NID upon receipt of an existing conformation result that a key value related to a registration request is not present in a DSN storing section of a storage location node thereof.

Next, the internal structure of the first slave node 15 will be described. The first slave node 15 is constituted to include a first accepting section 51, an existence determining section 53, a registration managing section 55, a first distribution processing section 57 and a first responding section 59.

The first accepting section 51 accepts a registration request for data of the DSN, D-CRX, D-CRS and D-RIX which are sent from the requesting section 41 of the master node 13 (which will be hereinafter referred to as "index data") or a data manipulation request such as a table join manipulation. The first accepting section 51 transfers the registration request for the index data to the existence determining section 53 if the request is given, and transfers the data manipulation request to the first distribution processing section 57 if the request is given.

In the case in which the registration request for the index data is given, the existence determining section 53 refers to first DSN of the first local data storing section 15a, thereby confirming whether data having the same value as a processing target key value included in the data of the DSN related to the registration request has already been present in the first DSN or not and sending the existence confirmation result to the first responding section 59. Moreover, the existence determining section 53 sends, to the registration managing section 55, a registration command for the data of the DSN related to a combination of the processing target key value included in the data of the DSN related to the registration request and unique NID to the key value based on the existence confirmation result.

The registration managing section 55 carries out a registration management for additionally storing the data of the DSN related to the registration request in the first local data storing section 15a (which is equivalent to the DSN storing section) in accordance with the registration command sent from the existence determining section 53. Moreover, the registration managing section 55 carries out a registration management for storing the data of the D-CRX, D-CRS and D-RIX related to the registration request in the first local data storing section 15a (which is equivalent to the D-CRX storing section, the D-CRS storing section and the D-RIX storing section) in accordance with the registration command sent from the master node 13. Consequently, all of the index data related to the registration request are completely registered. The registration managing section 55 is equivalent to a DSN registration managing section, a D-CRX registration managing section, a D-CRS registration managing section and a D-RIX registration managing section.

In the case in which a data manipulation request related to a self-node is given, the first distribution processing section 57 which is equivalent to a data manipulation executing section appropriately refers to first DSN, first D-CRX, first D-CRS and first D-RIX which are stored in the first local data storing section 15a, thereby executing a distribution processing related to the request for the other nodes in parallel. The first distribution processing section 57 transfers the obtained distribution processing result to the first responding section 59.

The first responding section 59 gives, as a response, an existence confirmation result sent from the existence determining section 53 to the master accepting section 31 of the master node 13. In the master node 13, the master accepting section 31 transfers the accepted existence confirmation result to the NID allocating section 33 as described above. The NID allocating section 33 generates the latest shared NID update control signal based on the existence confirmation result and sends the signal to the update managing section 45. The update managing section 45 controls the update of the latest shared NID in the DB management data in accordance with the latest shared NID update control signal transmitted from the NID allocating section 33. Moreover, the first responding section 59 gives a distribution processing result sent from the first distribution processing section 57 as a response to the processing result integrating section 43 of the master node 13.

### (Cooperation of Master Node 13 and Slave Nodes 15, 17 and 19 in the case in which Key Value Registration Request is given)

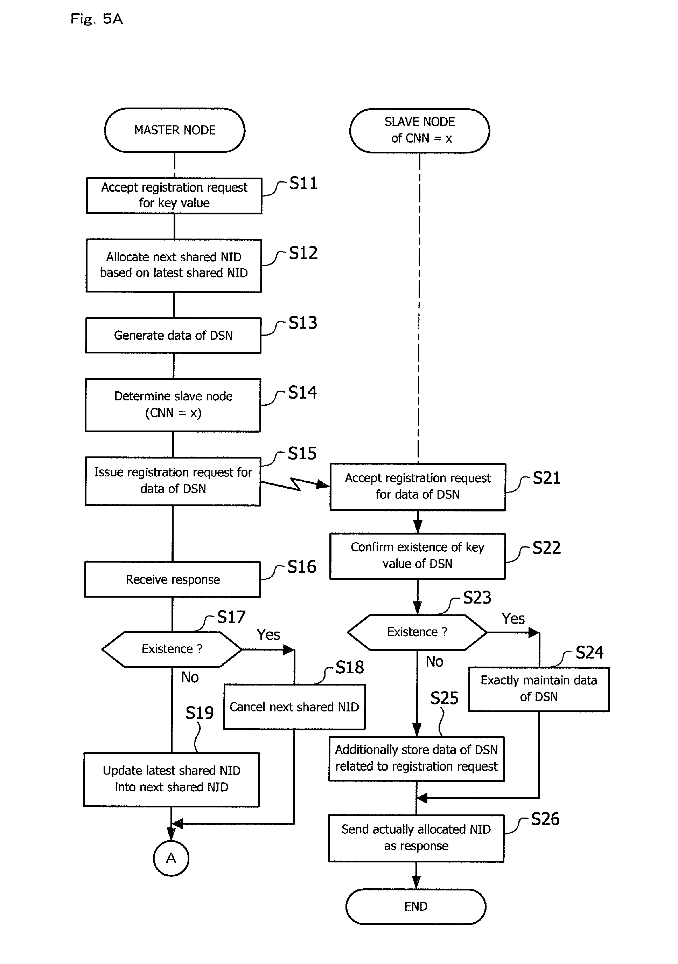

Next, description will be given to a cooperating operation of the master node 13 and the slave nodes 15, 17 and 19 in the case in which a key value registration request is given. First of all, the cooperating operation of the master node 13 and the slave nodes 15, 17 and 19 in the case in which a registration request for the data of the DSN is given will be described with reference to Fig. 5A.

Fig. 5A is a flow chart showing the cooperating operation of the master node 13 and the slave nodes 15, 17 and 19 in the case in which the registration request for the data of the DSN based on the key value registration request is given. As described above, the key value registration request is generally input to the master accepting section 31 on a tuple unit. However, it is assumed that the master accepting section 31 accepting input data on the tuple unit advances a processing by setting, as a unit, a key value and information about a data type thereof which are related to one of columns included in the tuple.

At Step S11, the master accepting section 31 of the master node 13 accepts a key value registration request issued from one of the client terminals 25a, 25b and 25c and transfers the request to the NID allocating section 33.

At Step S12, the NID allocating section 33 accepting the key value registration request refers to the latest shared NID in the DB management data stored in the master data storing section 13a, thereby allocating next shared NID (for instance, the next shared NID is a value obtained by incrementing a value of the newest shared NID by "1") which is suitable for the key value related to the registration request. Information about the next shared NID assigned to the key value related to the registration request by the NID allocating section 33 is sent to the index generating section 35.

At Step S13, the index generating section 35 of the master node 13 generates data of the DSN based on the key value related to a registration request, a data type possessed by the key value, and the next shared NID assigned to the key value by the NID allocating section 33.

At Step S14, the node determining section 37 of the master node 13 determines the slave node serving as a distribution storage location for the data of the DSN generated by the index generating section 35 through the Consistent hashing using a key value as a distribution key and sends the determined contents to the distribution supervising section 39. Herein, it is assumed that a node having a value of CNN = x (x is one of a to c) is determined as the slave node serving as the distribution storage location for the DSN. Moreover, subsequent description will be given on the assumption that the node having the value of CNN = x is the first slave node 15.

At Step S15, the requesting section 41 belonging to the distribution supervising section 39 of the master node 13 sends the data of the DSN generated at the Step S13 to the first slave node 15 having the value of CNN = x and determined by the node determining section 37 in the first to third slave nodes 15, 17 and 19 under the control of the master node 13, and issues a data registration request.

Although the description of the flow of the processing in the master node 13 is not completed, explanation will be given to the processing content in the first slave node 15 having the value of CNN = x for convenience of smooth description of the cooperation between the master node 13 and the first slave node 15. At Step S21, the first accepting section 51 of the first slave node 15 having the value of CNN = x accepts the DSN data registration request sent from the requesting section 41 of the master node 13 and transfers the request to the existence determining section 53.

The existence determining section 53 of the first slave node 15 having the value of CNN = x refers to the first DSN of the first local data storing section 15a, thereby confirming whether data having the same value as the processing target key value included in the data of the DSN related to the registration request has already been present in the first DSN or not at Step S22, and makes an existence determining related to whether the processing target key value related to the registration request has already been registered based on a result of the existence confirmation at Step S23. Then, the existence determining section 53 gives the registration managing section 55 a registration command for the data of the DSN related to a combination of a processing target key value related to the registration request and unique NID to the key value based on a result of the existence determining.

If it is decided that the processing target key value related to the registration request has already been registered as the result of the existence determining in the Step S23, the registration managing section 55 exactly maintains the data of the DSN related to a correspondence relation between the processing target key value related to the registration request and the registered NID without following the registration command sent from the existence determining section 53 at Step S24. Consequently, the allocation of the unique NID to the same key value is secured. In this case, the registration managing section 55 cancels the registration request for the data of the DSN. The reason is that the data of the DSN related to the correspondence relation between the processing target key value related to the registration request and the registered NID has already been registered and does not need to be registered additionally.

On the other hand, if it is decided that the processing target key value related to the registration request is an unregistered value as the result of the existence determining at the Step S23, the registration managing section 55 additionally stores, in the first local data storing section 15a, the data of the DSN to which the next shared NID is assigned suitably for the processing target key value related to the registration request in accordance with the registration command sent from the existence determining section 53 at Step S25. Herein, the additional storage of the data of the DSN to which the next shared NID is assigned indicates that the stored data of the DSN is not rewritten but the data of the DSN to which the next shared NID is assigned is stored to be added.

At Step S26, the first responding section 59 of the first slave node 15 returns the NID assigned actually to the processing target key value related to the registration request to the master accepting section 31 of the master node 13 together with the existence confirmation result after the processing of the Step S24 or S25, and the serial processing flow is thus ended.

The flow of the processing in the master node 13 will be described back. At Step S16, the master accepting section 31 of the master node 13 accepts the existence confirmation result transmitted from the first slave node 15 and the NID assigned actually to the processing target key value related to the registration request and transfers the result to the NID allocating section 33. At Step S17, the NID allocating section 33 makes an existence determining related to whether the processing target key value related to the registration request has already been registered or not.

If it is decided that the processing target key value related to the registration request has already been registered as a result of the existence determining at the Step S17, the NID allocating section 33 receiving the existence confirmation result that the processing target key value related to the registration request has already been present in the first slave node 15 to be a storage location thereof generates a control signal for prohibiting the update of the latest shared NID and sends the control signal to the update managing section 45 at Step S18. The update managing section 45 prohibits the update of the latest shared NID in accordance with the latest shared NID update control signal transmitted from the NID allocating section 33. Consequently, the next shared NID assigned to the processing target key value related to the registration request at the Step S12 is cancelled and the value of the latest shared NID is not updated but maintained exactly.

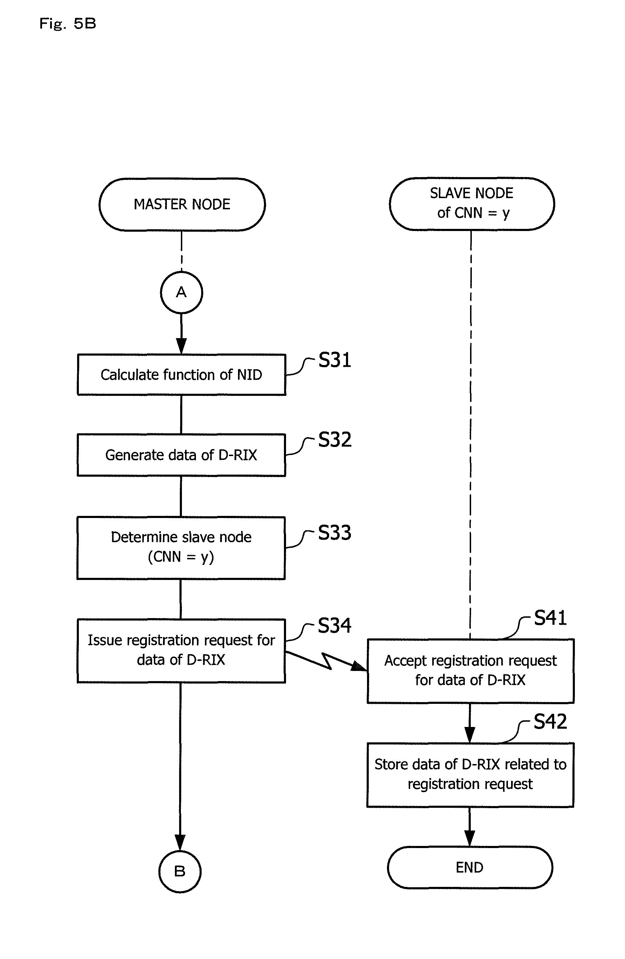

On the other hand, if it is decided that the key value related to the registration request is an unregistered value as the result of the existence determining at the Step S17, the NID allocating section 33 receiving the existence confirmation result that the processing target key value related to the registration request has not been present yet in the first slave node 15 to be the storage location thereof generates a control signal for updating the latest shared NID and sends the control signal to the update managing section 45 at Step S19. The update managing section 45 updates the value of the latest shared NID into the value of the next shared NID assigned to the key value related to the registration request at the Step S12 in accordance with the latest shared NID update control signal transmitted from the NID allocating section 33. After the update, the NID allocating section 33 advances the processing flow to Step S31 of Fig. 5B.

Next, a cooperating operation of the master node 13 and the slave nodes 15, 17 and 19 in the case in which a registration request for the data of the D-RIX is given after the registration for the data of the DSN is completed will be described with reference to Fig. 5B. Fig. 5B is a flow chart showing the cooperating operation of the master node 13 and the slave nodes 15, 17 and 19 in the case in which the registration request for the data of the D-RIX based on a key value registration request is given.

At the Step S31, the NID allocating section 33 of the master node 13 refers to the NID assigned actually to the processing target key value related to the registration request, thereby calculating a block number (D-RIX-BN) to be a function of the NID. More specifically, "the D-RIX-BN is a quotient obtained through a division of the NID by the D-RIX-BF" is calculated through an operation.

At Step S32, the index generating section 35 of the master node 13 generates data of the D-RIX based on the NID assigned actually to the processing target key value related to the registration request, an RID set corresponding to the NID, and a column name to which the processing target key value related to the registration request belongs.

At Step S33, the node determining section 37 of the master node 13 determines the slave node serving as a distribution storage location for the data of the D-RIX generated by the index generating section 35 through the Consistent hashing using, as a distribution key, the block number (D-RIX-BN) to be the function of the NID caluclated at the Step S31 and sends the determined contents to the distribution supervising section 39. Herein, it is assumed that a node having a value of CNN = y (y is one of a to c) is determined as the slave node serving as the distribution storage location for the data of the D-RIX. Moreover, subsequent description will be given on the assumption that the node having the value of CNN = y is the first slave node 15.

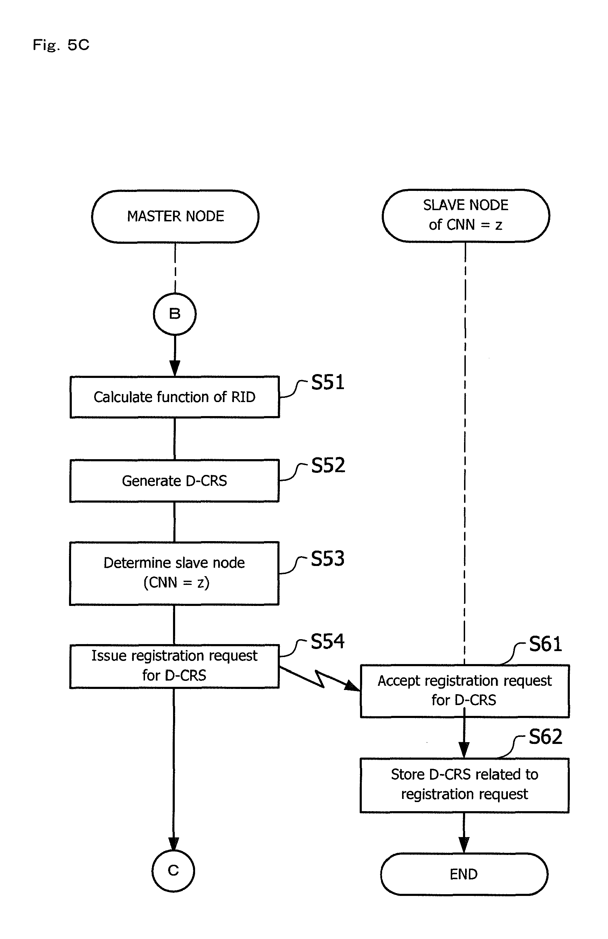

At Step S34, the requesting section 41 belonging to the distribution supervising section 39 of the master node 13 sends the data of the D-RIX generated at the Step S32 to the first slave node 15 having the value of CNN = y and determined by the node determining section 37 in the first to third slave nodes 15, 17 and 19 under the control of the master node 13, and issues a data registration request. After the issuance of the data registration request, the distribution supervising section 39 of the master node 13 advances the processing flow to Step S51 in Fig. 5C.

Although the description of the flow of the processing in the master node 13 is not completed, explanation will be given to the processing content in the first slave node 15 having the value of CNN = y for convenience of smooth description of the cooperation between the master node 13 and the first slave node 15. At Step S41, the first accepting section 51 of the first slave node 15 having the value of CNN = y accepts the registration request for the data of the D-RIX which is sent from the requesting section 41 of the master node 13 and transfers the request to the registration managing section 55 through the existence determining section 53.

At Step S42, the registration managing section 55 of the first slave node 15 having the value of CNN = y classifies the data of the D-RIX every column and stores the data in the first local data storing section 15a respectively in response to the registration request sent from the requesting section 41 of the master node 13. After the data of the D-RIX is stored at the Step S42, the registration managing section 55 of the first slave node 15 ends the serial processing flow.

Next, a cooperation of the master node 13 and the slave nodes 15, 17 and 19 in the case in which the registration for the data of the D-RIX is completed and a registration request for the data of the D-CRS is then given will be described with reference to Fig. 5C. Fig. 5C is a flow chart showing the cooperation of the master node 13 and the slave nodes 15, 17 and 19 in the case in which the registration request for the data of the D-CRS based on a key value registration request is given.

At the Step S51, the NID allocating section 33 of the master node 13 refers to RID corresponding to the NID assigned actually to the processing target key value related to the registration request, thereby calculating a block number (D-CRS-BN) to be a function of the RID. More specifically, "the D-CRS-BN is a quotient obtained through a division of the RID by the D-CRS-BF" is calculated through an operation.

At Step S52, the index generating section 35 of the master node 13 generates the data of the D-CRS based on the NID assigned actually to the processing target key value related to the registration request, the RID to which the processing target key value related to the registration request belongs, and a column name to which the processing target key value related to the registration request belongs.

At Step S53, the node determining section 37 of the master node 13 determines the slave node serving as a distribution storage location for the data of the D-CRS generated by the index generating section 35 through the Consistent hashing using, as a distribution key, the block number (D-CRS-BN) to be the function of the RID obtained at the Step S51 and sends the determined contents to the distribution supervising section 39. Herein, it is assumed that a node having a value of CNN = z (z is one of a to c) is determined as the slave node serving as the distribution storage location for the D-CRS. Moreover, subsequent description will be given on the assumption that the node having the value of CNN = z is the first slave node 15.

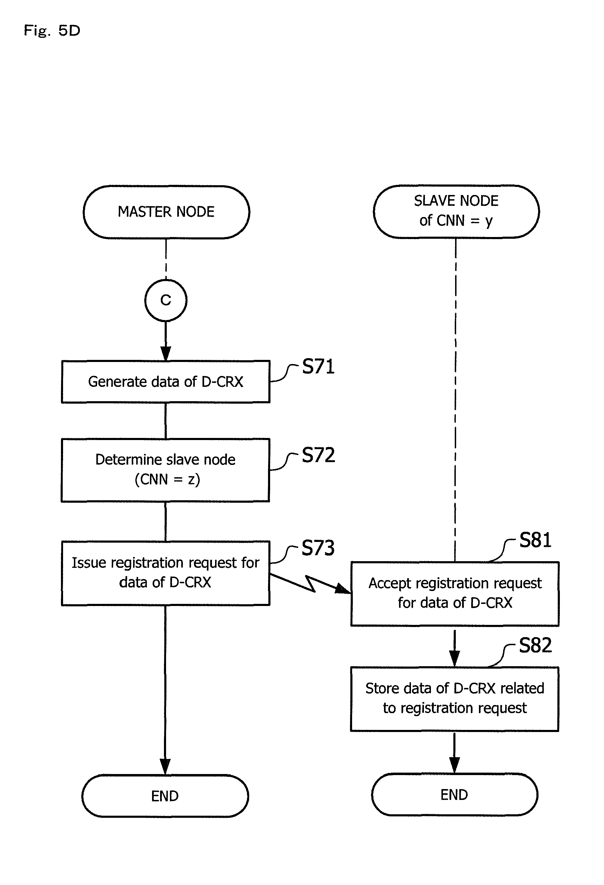

At Step S54, the requesting section 41 belonging to the distribution supervising section 39 of the master node 13 sends the data of the D-CRS generated at the Step S52 to the first slave node 15 having the value of CNN = z and determined by the node determining section 37 in the first to third slave nodes 15, 17 and 19 under the control of the master node 13, and issues a data registration request. After the issuance of the data registration request, the distribution supervising section 39 of the master node 13 advances the processing flow to Step S71 in Fig. 5D.

Although the description of the flow of the processing in the master node 13 is not completed, explanation will be given to the processing content in the first slave node 15 having the value of CNN = z for convenience of smooth description of the cooperation between the master node 13 and the first slave node 15. At Step S61, the first accepting section 51 of the first slave node 15 having the value of CNN = z accepts the registration request for the data of the D-CRS which is sent from the requesting section 41 of the master node 13 and transfers the request to the registration managing section 55 through the existence determining section 53.

At Step S62, the registration managing section 55 of the first slave node 15 having the value of CNN = z classifies the data of the D-CRS every column and stores the data in the first local data storing section 15a in response to the registration request sent from the requesting section 41 of the master node 13. After the data of the D-CRS is stored at the Step S62, the registration managing section 55 of the first slave node 15 ends the serial processing flow.

Next, a cooperation of the master node 13 and the slave nodes 15, 17 and 19 in the case in which the data of the D-CRS is completely registered and a registration request for the data of the D-CRX is given will be described with reference to Fig. 5D. Fig. 5D is a flow chart showing the cooperation of the master node 13 and the slave nodes 15, 17 and 19 in the case in which the registration request for the data of the D-CRX based on a key value registration request is given.

At Step S71, the index generating section 35 of the master node 13 generates the data of the D-CRX based on the processing target key value related to the registration request, NID assigned actually to the key value, and a column name to which the processing target key value related to the registration request belongs.

At Step S72, the node determining section 37 of the master node 13 refers to the data of the D-CRS determined through the flow chart of Fig. 5C, thereby determining a slave node serving as a distribution storage location for the data of the D-CRX generated by the index generating section 35 in such a manner that a storage location for the data of the D-CRX to which the same NID as NID indicated by the data of the D-CRS is assigned is the same slave node as a slave node determined as a storage location for the data of the D-CRS and sending the determined contents to the distribution supervising section 39.

In other words, the node determining section 37 determines the same block number as the block number D-CRS-BN of the D-CRS as the storage location for the data of the D-CRX to which the same NID as the NID indicated by the data of the D-CRS is assigned. Herein, it is assumed that a node having a value of CNN = z (z is one of a to c) is determined as a slave node serving as a distribution storage location for the data of the D-CRX. Moreover, subsequent description will be given on the assumption that the node having the value of CNN = z is the first slave node 15.

At Step S73, the requesting section 41 belonging to the distribution supervising section 39 of the master node 13 sends the data of the D-CRX generated at the Step S71 to the first slave node 15 having the value of CNN = z and determined by the node determining section 37 in the first to third slave nodes 15, 17 and 19 under the control of the master node 13, and issues a data registration request. After the issuance of the data registration request, the distribution supervising section 39 of the master node 13 ends the serial processing flow.

At Step S81, next, the first accepting section 51 of the first slave node 15 having the value of CNN = z accepts the registration request for the data of the D-CRX sent from the requesting section 41 of the master node 13 and transfers the request to the registration managing section 55 through the existence determining section 53.

At Step S82, the registration managing section 55 of the first slave node 15 having the value of CNN = z classifies the data of the D-CRX every column and stores the data in the first local data storing section 15a respectively in response to the registration request sent from the requesting section 41 of the master node 13. After the data of the D-CRX is stored at the Step S82, the registration managing section 55 of the first slave node 15 ends the serial processing flow.

The four types of index data registered as described above exert their power when the first to third slave nodes 15, 17 and 19 dispersively execute the processing such as the table join manipulation in parallel by using, as a target, the distributed RDB constituted by a large amount of data. In the distributed RDB system 11 according to the present embodiment, particularly, even if the number of the nodes in the system is increased to flexibly deal with a rapid rising demand and the data manipulation such as the table join manipulation is executed over data distributed and stored in each of the nodes after the increase when the distributed RDB service is to be offered via the WWW (World Wide Web), for instance, it is possible to implement a linear scale-out property capable of linearly enhancing a throughput of the whole system before or after the increase. Description will be given as an example of a distributed query processing as to how the throughput of the whole system can be enhanced efficiently and the linear scale-out property can be implemented by introducing the four types of index data.

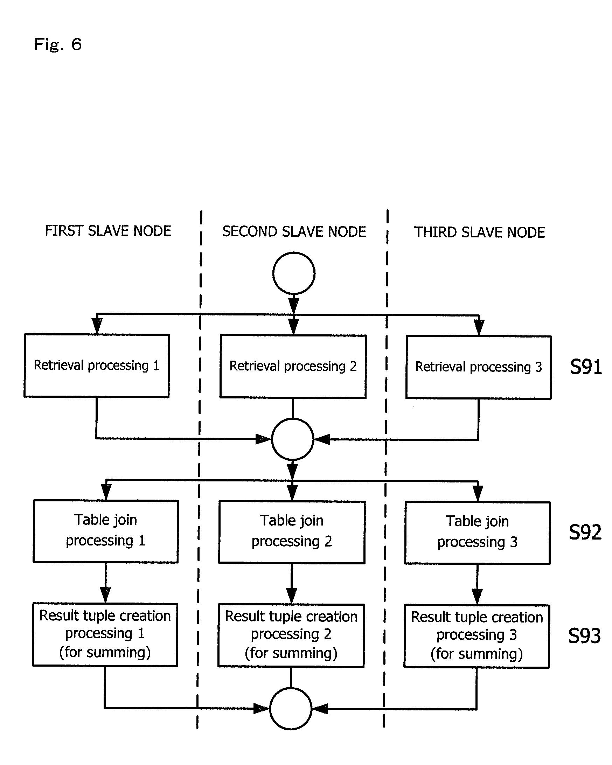

Fig. 6 is a process chart showing a flow of the distributed query processing. The distributed query processing shown in Fig. 6 is constituted by a distributed retrieval processing of Step S71, a distributed table join processing of Step S92, a distributed result tuple creation processing for aggregation of Step S93 and the like.

The distributed retrieval processing of the Step S71, the distributed table join processing of the Step S92 and the distributed result tuple creation processing for aggregation of the Step S93 are executable in parallel through the first to third slave nodes 15, 17 and 19. In a process of the Step S92 for executing a processing by using a result of an upstream phase, the processing cannot be executed until the processing in the upstream process (Step S71) is completed in all of the nodes.

Prior to description of the flow of the distributed query processing, the meaning of words to be used in explanation will be defined.

A search expression includes a search term, a logical operator and parentheses for controlling priority of an operation. The search expression is constituted by their optional combination.

The search term includes a left side term, a comparison operator, and a right side term. The left side term is constituted by a column name or a literal (an actual value). The right side term is constituted by a column name or a literal (an actual value). The comparison operator is constituted by equal "=", not equal "≠", greater than ">", equal to or greater than "≥", smaller than "<", and smaller than or equal to "≤".

The logical operator includes AND "&", OR "|" and NOT "¬". AND indicates an execution of a multiplication, OR indicates an execution of a sum operation, and NOT indicates an execution of a Negational operation. The parentheses are constituted by an open parentheses "(" and a close bracket ")".

Referring to the retrieval, a retrieval for the D-CRX using a key value itself as a search key in all of the slave nodes is carried out, and a retrieval for the D-CRS using an NID set extracted by the retrieval as a search key is then executed to acquire an RID set as a search result. In a range retrieval (for instance, a retrieval for extracting a key value belonging to a range designated by an start value and an end value with data of a numeric type used as a target), the specified range of the key value is given to carry out the retrieval for the D-CRX in all of the slave nodes and the retrieval for the D-CRS using, as a search key, the NID set extracted by the retrieval is then executed to acquire an RID set as a search result. In a partial matching retrieval (for instance, a retrieval for extracting a key value having a specified string in at least a part with data of a string type as a target), the specified string of the key value is given to carry out the retrieval for the D-CRX in all of the slave nodes and the retrieval for the D-CRS using, as a search key, the NID set extracted by the retrieval is then executed to acquire an RID set as a search result.

The table join implies a table join manipulation for an outer table and an inner table. The outer table is a basis list for a table join. The inner table is a partner list of a table join for the outer table. The outer table and the inner table are joind by a value of a join column. The join column is present in common to the outer table and the inner table and plays a role for combining the outer table and the inner table through the column. The join column of the outer table is referred to as an outer table foreign key column and the join column of the inner table is referred to as an inner table primary key column. By repeating the table join manipulation, it is possible to join a plurality of lists.

Next, the contents of the distributed retrieval processing of the Step S71 shown in Fig. 6 will be described by taking a specific example with reference to Figs. 2A and 2B. As an example 1 of a exact match retrieval with a single term, there will be taken an example in which a key value having "area name" of "Kanto" is extracted as the RID set. In the example 1, first of all, the distribution processing sections of the first to third slave nodes 15, 17 and 19 receiving a search request from the master node 13 extract the search term from the search expression and obtain a search term set of {area name = "Kanto"}. The retrieval is simultaneously executed in the distribution processing sections of the first to third slave nodes 15, 17 and 19 by using a member of the search term set {area name = "Kanto"} with D-CRX (CNN = a to c) having a column name of "area name" set to be a target. By the retrieval, an NID set = {6} is obtained from the member of {area name = "Kanto"}.

In the simultaneous retrieval using the D-CRX (CNN = a to c) as a target, it is possible to stop the retrieval when a key value which is coincident with a search condition hits without requiring a full scan collation. The reason is that the D-CRX employs a data structure which does not permit the overlap of the key value in a certain column. According to the data structure of the D-CRX, therefore, it is possible to contribute to a reduction in a time required for the retrieval (and so forth).

Subsequently, the distribution processing sections of the first to third slave nodes 15, 17 and 19 carry out the full scan collation in the NID set = {6} on a member unit by using, as a target, the D-CRS (CNN = a to c) having the column name of "area name", thereby obtaining an RID set which is coincident with the value of the NID set. The processing is simultaneously carried out by the distribution processing sections of the first to third slave nodes 15, 17 and 19, thereby obtaining an RID set = {2, 3, 7, 9}. The RID set = {2, 3, 7, 9} is an answer to find.

The value retrieval of the NID set using the D-CRS as a target can be accomplished completely in a comparatively short time irrespective of the necessity of the full scan collation. The reason is that the NID (for instance, a natural number) is substituted for the key value to be the actual value by a retrieval using the D-CRX in a former stage and the value of the NID thus substituted is used to carry out the full scan collation. In the distribution processing sections of the first to third slave nodes 15, 17 and 1 9, the NID is expressed in a binary integer value having a fixed width. Therefore, a remarkable efficiency can be obtained in a retrieval or reference as compared with the key value to be the actual value. According to the data retrieval related to the combination of the D-CRX and the D-CRS, therefore, it is possible to contribute to a reduction in the time required for the retrieval (and so forth).

As the exact match retrieval in a plurality of terms (a combination of single terms), for instance, there will be taken an example 2 in which a key value having "area name" of "Kanto" or a key value having "area name" of "Kansai" is extracted as an RID set. In the example 2, search conditions in the respective single terms are used respectively to execute each of the exact match retrievals in the single term in accordance with the procedure of the example 1, thereby performing a logical sum (OR) operation of the mutual RID sets thus obtained. Thus, it is possible to acquire an intended RID set.

As an example 3 of the range retrieval in a single term, there will be taken an example in which an RID set having "price" of 500000 to 800000 is extracted. In the example 3, first of all, the distribution processing sections of the first to third slave nodes 15, 17 and 19 receiving a search request from the master node 13 extract a search term from the search expression to find a search term set { [price ≥ 500000 and price ≤ 800000]}. By setting, as a target, D-CRX (CNN = a to c) having the column name of "price", then, the retrieval is simultaneously executed in the distribution processing sections of the first to third slave nodes 15, 17 and 19 by using a member of the search term set of {[price ≥ 500000 and price ≤ 800000]}. By the retrieval, an NID set = {5, 8, 11, 14, 22, 30} is obtained from a first member of {[price ≥ 500000]}. An NID set = {2, 8, 11, 17, 22, 30} is obtained from a second member of {[price ≤ 800000]}. Next, the distribution processing sections of the first to third slave nodes 15, 17 and 19 apply an NID set every first and second members to the search expression to find a logical product (AND) operation of the mutual NID sets, thereby obtaining an NID set = {8, 11, 22, 30} as a search result. By using D-CRS (CNN = a to c) having the column name of "price", a full scan collation is carried out through the NID set = {8, 11, 22, 30} on a member unit to obtain an RID set which is coincident with a value of the NID set.

As an example 4 of the partial matching retrieval in a single term, there will be taken an example in which a key value to be coincident with a search condition of ["area name" = LIKE "%Kan%"] (in accordance with the SQL notation, LIKE represents a key word of an ambiguous retrieval instruction and % represents a wild card symbol. In the case of this example, a key value including a string having "area name" of "Kan" is retrieved). In the example 4, first of all, the distribution processing sections of the first to third slave nodes 15, 17 and 19 receiving a search request from the master node 13 extract the search term from the search expression to find a search term set {"area name" = LIKE "%Kan%"}. By setting, as a target, D-CRX (CNN = a to c) having the column name of "area name", then, the retrieval is simultaneously executed in the distribution processing sections of the first to third slave nodes 15, 17 and 19 by using a member of the search term set of {"area name" = LIKE "%Kan%"}. By the retrieval, an NID set = {6, 33} is obtained from a member of {"area name" = LIKE "%Kan%"}.

Subsequently, the distribution processing sections of the first to third slave nodes 15, 17 and 19 carry out the full scan collation in the NID set = {6, 33} on a element unit by using, as a target, the D-CRS (CNN = a to c) having the column name of "area name", thereby obtaining an RID set which is coincident with the value of the NID set. The processing is simultaneously carried out by the distribution processing sections of the first to third slave nodes 15, 17 and 19, thereby obtaining an RID set = {2, 3, 7, 9, 12, 15}. The RID set = {2, 3, 7, 9, 12, 15} is an answer to find.

As the partial matching retrieval in a plurality of terms (a combination of single terms), for instance, there will be taken an example 5 in which a key value having "area name" including a string of "Kan" or a key value having "area name" including a string of "To" is extracted as an RID set. In the example 5, search conditions in the respective single terms are used respectively to execute each of the partial matching retrievals in the single term in accordance with the procedure of the example 4, thereby performing a logical sum (OR) operation of the mutual RID sets thus obtained. Thus, it is possible to acquire an RID set as a search result.

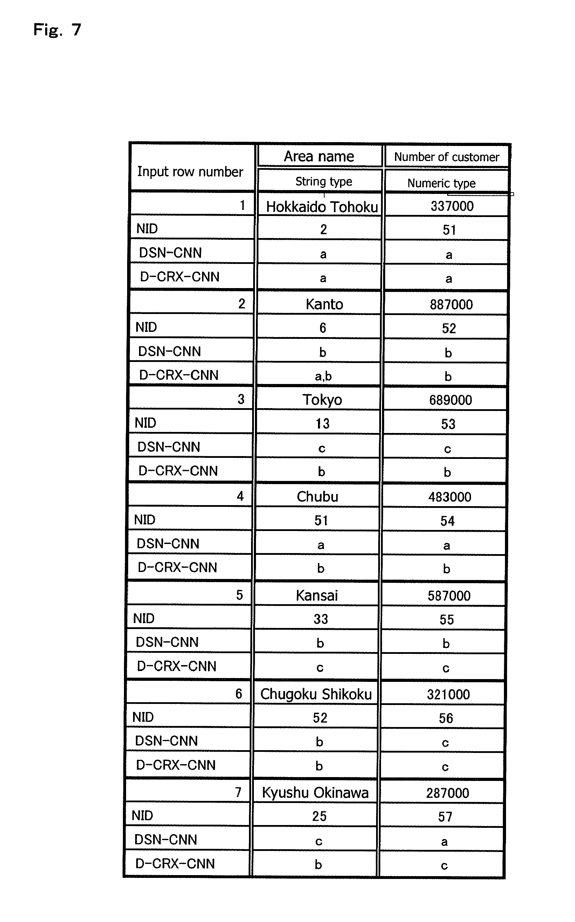

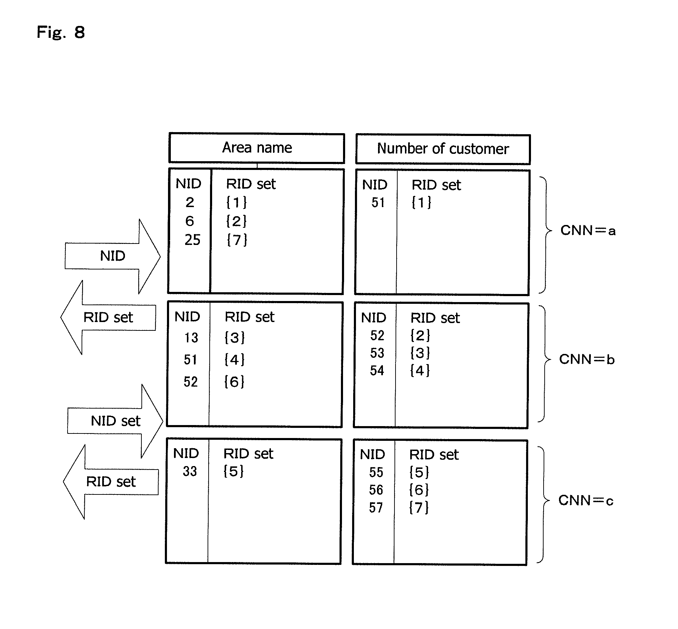

Next, a procedure for the distributed table join processing of the Step S92 shown in Fig. 6 will be descried by taking a specific example with reference to Figs. 2A, 2B, 7 and 8. Fig. 7 is a table showing an inner table for the number of customers for an individual area to be distributed and stored in the slave nodes 15, 17 and 19. Fig. 8 is a diagram showing an example of D - RIX in the inner table illustrated in Fig. 7. In an example 6, a join result of the outer table and the inner table is obtained by referring to D-RIX of the join column in the distribution processing sections of the first to third slave nodes 15, 17 and 19. In the example 6, Figs. 2A and 2B showing the sales management tables (transactions) distributed and stored in the slave nodes 15, 17 and 19 are placed as the outer tables. Fig. 7 showing the number of customers for an individual area which are distributed and stored in the slave nodes 15, 17 and 19 is placed as the inner table. In the example 6, the join column is "area name".

In the example 6, first of all, the distribution processing sections of the first to third slave nodes 15, 17 and 19 receiving the list join operation request given from the master node 13 acquire the NID set of the outer table external key column (which will be hereinafter referred to as "OTFK-NID") from the D-RIX of the outer table (which will be hereinafter referred to as"OTFK-D-RIX"), respectively. More specifically, an OTFK-NID set of {2, 6, 25} is acquired from the column of "area name" shown in Fig. 3D in the first slave node (CNN = a) 15, for instance.

Next, the distribution processing sections of the first to third slave nodes 15, 17 and 19 use a member (NID) of the OTFK-NID set as a search condition to retrieve the D-RIX of the inner table primary key column (which will be hereinafter referred to as "ITPK-D-RIX"), respectively. More specifically, the member of {2, 6, 25} of the OTFK-NID set is used as the search condition to retrieve an NID (hereinafter referred to as "ITPK-NID") set of the inner table primary key column which is coincident with the member of {2, 6, 25} of the OTFK-NID set from the column of "area name" shown in Fig. 8 in the first slave node (CNN = a) 15, for instance. By the retrieval, an ITPK-NID set of {2, 6, 25} is obtained.

In the case in which the ITPK-NID set is successfully retrieved, the distribution processing sections of the first to third slave nodes 15, 17 and 19 acquire an outer table RID (hereinafter referred to as "OTRID") set corresponding to the OTFK-NID set from an objective column (the outer table foreign key column) of the OTFK-D-RIX, respectively. More specifically, an OTRID set of {1, 2, 3, 5, 7, 8, 9, 10, 14} corresponding to the OTFK-NID set of {2, 6, 25} is acquired from the column of "area name" shown in Fig. 3D in the first slave node (CNN = a) 15, for instance.

Next, the distribution processing sections of the first to third slave nodes 15, 17 and 19 acquire an inner table RID (hereinafter referred to as "ITRID") set corresponding to the ITPK-NID set from an objective column (the inner table primary key column) of the ITPK-D-RIX, respectively. More specifically, an ITRID set of {1, 2, 7} corresponding to the ITPK-NID set of {2, 6, 25} is acquired from the column of "area name" shown in Fig. 8 in the first slave node (CNN = a) 15, for instance.

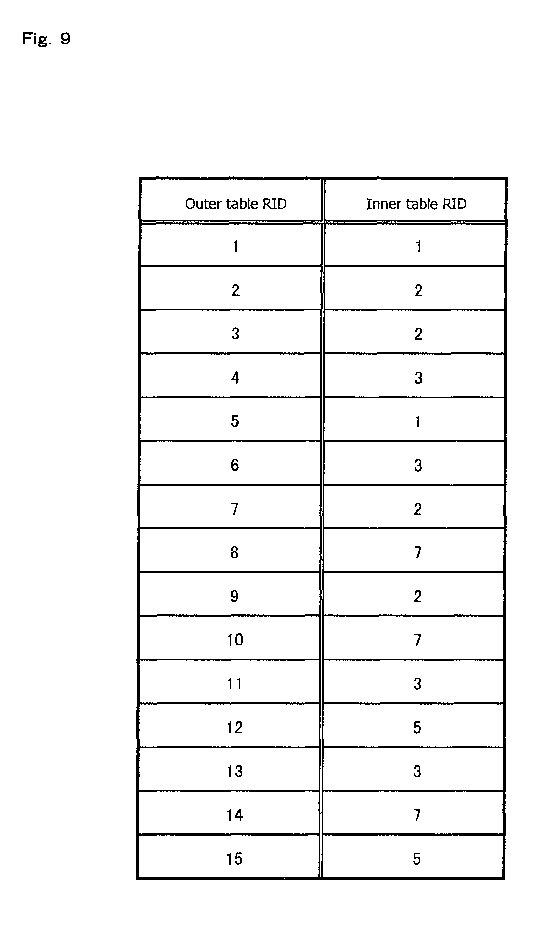

Then, the distribution processing sections of the first to third slave nodes 15, 17 and 19 create a contrast list of the inner table RID corresponding to the outer table RID (which will be hereinafter referred to as "REF-OTRID-ITRID"), respectively. The REF-OTRID-ITRID plays a role for combining the outer table RID and the inner table RID corresponding thereto with mutually common OTFK-NID and ITPK-NID interposed therebetween. Consequently, an RID contrast list shown in Fig. 9 can be obtained.

In the case in which there is a plurality of join conditions, the distribution processing sections of the first to third slave nodes 15, 17 and 19 create REF-OTRID-ITRID in accordance with the procedure of the example 6 respectively every join conditions, and carry out a logical operation over the mutual REF-OTRID-ITRID thus obtained. Consequently, it is possible to obtain REF-OTRID-ITRID (RID contrast list) as a join result every slave nodes 15, 17 and 19.

The RID contrast list to be the join result according to the example 6 is expressed in the REF-OTRID-ITRID distributed and stored every slave nodes 15, 17 and 19. A data structure of the RID contrast list to be the join result greatly influences a storage efficiency and a processing efficiency of data in the RDB. It is possible to perform an equivalent function to the join table without creating, on an actual value base, the join table which is apt to be huge. In the distribution processing sections of the first to third slave nodes 15, 17 and 19, the REF-OTRID-ITRID are followed in order based on the outer table. Consequently, it is possible to efficiently refer to the RID of the objective column (the inner table primary key column) in the inner table by using, as a pointer, the RID of the objective column (the outer table foreign key column) in the outer table. If RID of an actual list (the outer table or the inner table) belonging to the objective column (the outer table foreign key column or the inner table primary key column) is obtained, it is possible to acquire corresponding NID by referring to the D-CRS with the RID used as a pointer. If the NID is obtained, it is possible to acquire a corresponding key value by referring to the D-CRX with the NID used as a pointer.

A data structure of the search result is represented as an RID set of the outer table. On the other hand, a data structure of the join result is represented as a chain of the REF-OTRID-ITRID (the RID contrast list) based on the outer table. These common features are that both of them have the RID set of the outer table. By carrying out a logical operation through the mutual RID sets of the respective outer tables of the search result and the join result, accordingly, it is possible to efficiently implement a logical operation related to a combination of the search result and the join result.

According to the example 6, a complicated operation for the table join manipulation can be replaced with a simple set operation. For this reason, it is possible to implement a considerable reduction in a time required for an operation processing. According to the example 6, moreover, it is possible to eliminate the necessity of matching of a key value between the join column of the outer table and the join column of the inner table. This is based on the fact that the allocation of the same NID to the same key value is secured by the employment of the DSN and there is the RID contrast list for combining the outer table RID and the inner table RID corresponding thereto with the common NID interposed therebetween.

In the example 6, moreover, information (NID) about the same key value is intentionally distributed and stored so as to be collected into the same slave node. In contrast to the conventional example in which a key value having the same value is distributed and stored at random across the slave nodes, therefore, in the case in which a certain one of the slave nodes executes a data manipulation such as a join operation, for instance, a communication between the slave nodes for mutually referring to the key value having the same value is not generated at all. According to the example 6, therefore, it is possible to suppress overhead of a processing as the whole system. Therefore, it is possible to efficiently enhance a throughput of the whole distributed RDB system 11.

In brief, according to the example 6, even if the number of the slave nodes in the system is increased to flexibly deal with a rapid rising demand and the data manipulation such as the table join manipulation is executed over data distributed and stored in each of the slave nodes after the increase when the distributed RDB service is to be offered via the WWW (World Wide Web), for instance, it is possible to implement a linear scale-out property capable of linearly enhancing a throughput of the whole system before or after the increase.

Next, description will be given to an overview of the distributed result tuple creation processing for aggregation of the Step S93 shown in Fig. 6 separately for the case in which the table join manipulation is not carried out and the case in which the table join manipulation is carried out. The processing of the Step S93 is executed in parallel in each of the first to third slave nodes 15, 17 and 19. In the distributed result tuple creation processing for aggregation in the case in which the list join operation is not carried out, the distribution processing sections of the first to third slave nodes 15, 17 and 19 acquire the RID to be the member of the RID set from the RID set to be the search results, respectively.

Then, the distribution processing sections of the first to third slave nodes 15, 17 and 19 specify any of the nodes which holds data of NID corresponding to the acquired RID based on the acquired RID. More specifically, the distribution processing sections of the first to third slave nodes 15, 17 and 19 carry out the following calculation, thereby specifying a data storage location node number of D-CRS-CNN. In other words, the distribution processing section determines a block number of D-CRS-BN of the D-CRS based on the RID. A hash operation based on the Consistent hashing is carried out by using the determined D-CRS-BN to determine the D-CRS-CNN. In the case in which a node other than a self-node holds the data of the NID data corresponding to the acquired RID, the self-node acquires the data from the node other than the self-node. Subsequently, the self-node uses the acquired RID as a pointer to acquire NID by referring to the D-CRS of the objective column constituting the tuple.

Next, the distribution processing sections of the first to third slave nodes 15, 17 and 19 specify any node holding data of a key value corresponding to the acquired NID based on the D-CRS-CNN determined as described above. More specifically, the distribution processing sections of the first to third slave nodes 15, 17 and 19 carry out the following calculation, thereby specifying a data storage location node number of D-CRX-CNN. In other words, the distribution processing sections determine the D-CRX-CNN in such a manner that a storage location for the data of the D-CRX to which the same NID as the NID indicated by the D-CRS-CNN is assigned is the same as the D-CRS-CNN. In the case in which the node other than the self-node holds data of a key value corresponding to the acquired NID, the self-node acquires the data from the node other than the self-node. Subsequently, the self-node uses the acquired NID as a pointer to acquire a key value to be an actual value by referring to the D-CRX of the objective column constituting the tuple.

In the distributed result tuple creation processing for aggregation in the case in which the table join manipulation is carried out, then, the distribution processing sections of the first to third slave nodes 15, 17 and 19 acquire the RID of the outer table from the RID set to be respective search results.

Thereafter, the distribution processing sections of the first to third slave nodes 15, 17 and 19 specify any of the nodes which holds data of NID corresponding to the RID of the outer table acquired based on the RID of the outer table which is obtained. More specifically, the distribution processing sections of the first to third slave nodes 15, 17 and 19 carry out the following calculation, thereby specifying a data storage location node number of D-CRS-CNN. In other words, the distribution processing section determines a block number of D-CRS-BN of the D-CRS based on the RID of the outer table. A hash operation based on the Consistent hashing is carried out by using the determined D-CRS-BN to determine the D-CRS-CNN. In the case in which a node other than a self-node holds the data of the NID corresponding to the RID of the outer table which is acquired, the self-node acquires the data from the node other than the self-node. Subsequently, the self-node uses, as a pointer, the RID of the outer table which is acquired, thereby obtaining RID of the inner table to be objective from REF-OTRID-ITRID of the objective column constituting the tuple by referring to an REF-OTRID-ITRID chain.

Next, the distribution processing sections of the first to third slave nodes 15, 17 and 19 specify any of the nodes which holds data on NID corresponding to the RID of the inner table acquired based on the RID of the inner table which is obtained. More specifically, the distribution processing sections of the first to third slave nodes 15, 17 and 19 carry out the following calculation, thereby specifying a data storage location node number of D-CRS-CNN. In other words, the distribution processing section determines a block number of D-CRS-BN of the D-CRS based on the RID of the inner table. A hash operation based on the Consistent hashing is carried out by using the determined D-CRS-BN to determine the D-CRS-CNN. In the case in which a node other than a self-node holds data of NID corresponding to the RID of the inner table which is acquired, the self-node acquires the data from the node other than the self-node. Subsequently, the self-node uses, as a pointer, the RID of the inner table which is acquired, thereby referring to the D-CRS of the objective column constituting the tuple to obtain the NID.

Next, the distribution processing sections of the first to third slave nodes 15, 17 and 19 specify any node holding data of a key value corresponding to the acquired NID based on the D-CRS-CNN determined as described above. More specifically, the distribution processing sections of the first to third slave nodes 15, 17 and 19 carry out the following calculation, thereby specifying a data storage location node number of D-CRX-CNN. In other words, the distribution processing sections determine the D-CRX-CNN in such a manner that a storage location for the data of the D-CRX to which the same NID as the NID indicated by the D-CRS-CNN is assigned is the same as the D-CRS-CNN. In the case in which the node other than the self-node holds data of a key value corresponding to the acquired NID, the self-node acquires the data from the node other than the self-node. Subsequently, the self-node uses the acquired NID as a pointer to acquire a key value to be an actual value by referring to the D-CRX of the objective column constituting the tuple.

Although there has been described the example in which the distribution processing sections of the first to third slave nodes 15, 17 and 19 carry out the hashing operation through the Consistent hashing by themselves to determine the D-CRS-CNN in the present embodiment, the present invention is not restricted thereto. For instance, the master node 13 may hold the D-CRS-CNN as the master data 13a and the distribution processing sections of the first to third slave nodes 15, 17 and 19 may send query to the master node 13. However, each of the slave nodes carries out the operation by itself more efficiently and preferably than the inquiry to the master node 13.

As described above, the index generating section 35 of the mater node 13 creates the index data (DSN, D-CRX, D-CRS, D-RIX) for distributing and storing the first to third slave nodes 15, 17 and 19 respectively and then transmits the created index data to the node determined by the node determining section 37 in a lump, and processes the index data in a lump over each of the determined nodes.

When the storage location node for the index data is to be determined by the Consistent hashing, the key value, the function of NID and the function of RID are used as the distribution key in the DSN, the D-RIX and the D-CRS, respectively. Consequently, in the case in which a certain one of the slave nodes executes a data manipulation such as a join operation, for instance, a communication between the slave nodes for mutually referring to the key values having the same value is not generated at all. Therefore, it is possible to implement an enhancement in the efficiency of the index data processing.

In the present embodiment, moreover, the distributed storage location for the data of the D-CRX to which the same NID as the NID indicated by the data of the D-CRS is assigned is the same slave node as the slave node determined as the storage location for the data of the D-CRS. In the case in which a certain one of the slave nodes executes the data manipulation such as the join operation, consequently, the data of the key value indicated to correspond to the NID by the data of the D-CRX is also held in the self-node if the data of the NID is held in the self-node. Therefore, a communication between the slave nodes to obtain data of the key value is generated with difficulty. Accordingly, it is possible to suppress the overhead of the processing as the whole system. Thus, it is possible to efficiently enhance the throughput of the whole distributed RDB system 11.

Moreover, the NID and the key value are controlled to make a one-to-one correspondence by the DSN. In a processing to be carried out before the key value is required as a meaningful value, therefore, it is preferable to use the NID (taking a value of a natural number and an ordinal number) in place of the key value. Consequently, it is possible to reduce all of the operations into an arithmetic operation. In a calculator, the NID is expressed in a binary integer value having a fixed width. Therefore, a higher efficiency can be obtained in the retrieval or the reference as compared with the key value to be an actual value. Accordingly, it is possible to contribute to a reduction in a time required for an operation processing.

The embodiment described above shows the example of the realization of the present invention. Therefore, the technical scope of the present invention should not be thereby construed to be restrictive. The reason is that the present invention can be carried out in various configurations without departing from the gist or main features thereof.

Although the description has been given by taking the first to third slave nodes 15, 17 and 19 as the example of the slave nodes in the present embodiment, for instance, the present invention is not restricted to the example. It is preferable that the number of the slave nodes should be regulated to be a proper number corresponding to an increase/decrease in a data volume to be a processing target.

Although the description has been given by taking the single master node 13 as the example of the master node in the present embodiment, moreover, the present invention is not restricted to the example. In order to enhance a load distribution or a fault tolerance, a replication of the master node may be provided. A replication of the slave node may also be provided.

Although the description has been given in the state in which the index data of the D-RIX is arranged in a line with the DSN, the D-CRX and the D-CRS in the present embodiment, moreover, the D-RIX does not have an indispensable data structure in the present invention. The reason is as follows. Although the D-RIX can implement an enhancement in the efficiency of the processing in the table join manipulation, the function can be substituted by the full scan collation referring to the D-CRS even if there is no D-RIX.

Although the description has been given to the example in which the index generating section 35, the node determining section 37 and the update managing section 45 are provided in the master node 13 in the embodiment, moreover, the present invention is not restricted thereto. For instance, these functional structures may be provided in the slave nodes 15, 17 and 19. When bulk data are to be registered, it is possible to enhance the efficiency of the processing by executing the processings related to the index generating section 35, the node determining section 37 and the update managing section 45 in parallel by the slave nodes 15, 17 and 19.

### [Industrial Applicability]

The present invention is applicable in a distributed database system including a plurality of slave nodes and a master node.

## Claims

1. A distributed database system having a master node for supervising a plurality of slave nodes and serving to distribute and store a key value in the slave nodes, and causing the slave nodes to execute a data manipulation based on a command sent from the master node in parallel by using the key value which is distributed and stored, comprising:
a registration request accepting section for accepting a key value related to a registration request and information about a data type thereof;
an NID allocating section for allocating a key value identifier (hereinafter referred to as "NID") taking a unique value within a range of the data type possessed by the key value related to the registration request in the whole distributed database to the key value related to the registration request which is accepted by the registration request accepting section;
a DSN generating section for generating data of distributed shared NID (hereinafter referred to as "DSN") related to a correspondence relation between the key value related to the registration request and the NID assigned by the NID allocating section;
a DSN storage node determining section for determining one of the slave nodes to be a storage location for the data of the DSN which is generated by the DSN generating section from the slave nodes based on the key value related to the registration request;
a D-CRX generating section for generating data of a distributed, compressed and restored index (hereinafter referred to as "D-CRX") related to the correspondence relation between the key value related to the registration request and the NID assigned by the NID allocating section;
a D-CRX storage node determining section for determining, from the slave nodes, one of the slave nodes serving as a storage location for the data of the D-CRX which is generated by the D-CRX generating section;
a D-CRS generating section for generating data of a distributed and compressed result set cache (hereinafter referred to as "D-CRS") related to a correspondence relation between a distributed row identifier (hereinafter referred to as "RID") taking a unique value every column in a table constituting the distributed database and the NID assigned by the NID allocating section; and
a D-CRS storage node determining section for determining, from the slave nodes, one of the slave nodes serving as a storage location for the data of the D-CRS which is generated by the D-CRS generating section based on a function of the RID,
wherein the D-CRX storage node determining section determines, as the storage location for the data of the D-CRX, the same slave node as the slave node determined as the storage location for the data of the D-CRS by the D-CRS storage node determining section in relation to the data of the D-CRX to which the same NID as NID indicated by the data of the D-CRS is assigned.

2. The distributed database system according to claim 1, further comprising:
a D-RIX generating section for generating data of a distributed row identification index (hereinafter referred to as "D-RIX") related to a correspondence relation between the NID assigned to the key value related to the registration request and a set of the RID; and
a D-RIX storage node determining section for determining one of the slave nodes serving as a storage location for the D-RIX generated by the D-RIX generating section from the slave nodes based on a function of the NID.

3. The distributed database system according to claim 1, wherein the registration request accepting section, the NID allocating section, the DSN generating section and the DSN storage node determining section are provided in the master node,
the master node further comprises a DSN registration requesting section for sending the data of the DSN and the information about the data type possessed by the key value related to the registration request to one of the slave nodes which is determined by the DSN storage node determining section, thereby issuing a registration request for the data of the DSN,
each of the slave nodes comprises:
a DSN registration managing section for carrying out a registration management for classifying the data of the DSN every data type possessed by the key value related to the registration request and storing the data of the DSN in a DSN storing section in response to the registration request of the data of the DSN which is issued by the DSN registration requesting section; and
an existence determining section for deciding whether the key value related to the registration request has already been present in the DSN storing section or not, and
the DSN registration managing section exactly maintains registered contents of the DSN to which the NID that has already been assigned to the key value related to the registration request belongs if it is decided that the key value related to the registration request has already been registered in the DSN storing section by the existence determining section, while carries out a registration management for storing, in the DSN storing section, the data of the DSN related to a correspondence relation between the key value related to the registration request and NID assigned at this time if it is decided that the key value related to the registration request has not been present in the DSN storing section by the existence determining section.

4. The distributed database system according to claim 1, wherein the DSN generating section and the DSN storage node determining section are provided in the slave nodes.

5. The distributed database system according to claim 1, wherein the DSN generating section, the DSN storage node determining section, the D-CRX generating section, the D-CRX storage node determining section, the D-CRS generating section and the D-CRS storage node determining section are provided in the master node,
the master node further comprises:
a DSN registration requesting section for sending the data of the DSN and the information about the data type possessed by the key value related to the registration request to one of the slave nodes which is determined by the DSN storage node determining section, thereby issuing a registration request for the data of the DSN;
a D-CRX registration requesting section for sending the data of the D-CRX and information about a column to which the key value related to the registration request belongs to one of the slave nodes which is determined by the D-CRX storage node determining section, thereby issuing a registration request for the data of the D-CRX; and
a D-CRS registration requesting section for sending the data of the D-CRS and the information about the column to one of the slave nodes which is determined by the D-CRS storage node determining section, thereby issuing a registration request for the data of the D-CRS,
each of the slave nodes further comprises:
a DSN registration managing section for carrying out a registration management for classifying the data of the DSN every data type possessed by the key value related to the registration request and storing the data of the DSN in a DSN storing section in response to the registration request for the data of the DSN which is issued by the DSN registration requesting section;
a D-CRX registration managing section for carrying out a registration management for classifying the data of the D-CRX for each column to which the key value related to the registration request belongs and storing the data of the D-CRX in the D-CRX storing section in response to the registration request for the data of the D-CRX which is issued by the D-CRX registration requesting section;
a D-CRS registration managing section for carrying out a registration management for classifying the data of the D-CRS every column and storing the data of the D-CRS in the D-CRS storing section in response to the registration request for the data of the D-CRS which is issued by the D-CRS registration requesting section; and
a data manipulation executing section for executing a data manipulation based on a command sent from the master node in parallel by using information stored in the DSN storing section, the D-CRX storing section and the D-CRS storing section, and
the master node further comprises a processing result integrating section for integrating a processing result executed in parallel by the data manipulation executing sections of the slave nodes.

6. The distributed database system according to claim 1, wherein the DSN generating section, the DSN storage node determining section, the D-CRX generating section, the D-CRX storage node determining section, the D-CRS generating section and the D-CRS storage node determining section are provided in the slave nodes.

7. The distributed database system according to claim 2, wherein the DSN generating section, the DSN storage node determining section, the D-CRX generating section, the D-CRX storage node determining section, the D-CRS generating section, the D-CRS storage node determining section, the D-RIX generating section, and the D-RIX storage node determining section are provided in the master node,
the master node further comprises:
a DSN registration requesting section for sending the data of the DSN and the information about the data type possessed by the key value related to the registration request to one of the slave nodes which is determined by the DSN storage node determining section, thereby issuing a registration request for the data of the DSN;
a D-CRX registration requesting section for sending the data of the D-CRX and information about a column to which the key value related to the registration request belongs to one of the slave nodes which is determined by the D-CRX storage node determining section, thereby issuing a registration request for the data of the D-CRX;
a D-CRS registration requesting section for sending the data of the D-CRS and the information about the column to one of the slave nodes which is determined by the D-CRS storage node determining section, thereby issuing a registration request for the data of the D-CRS; and
a D-RIX registration requesting section for sending the data of the D-RIX and the information about the column to one of the slave nodes which is determined by the D-RIX storage node determining section, thereby issuing a registration request for the data of the D-RIX,
each of the slave nodes further comprises:
a DSN registration managing section for carrying out a registration management for classifying the data of the DSN every data type possessed by the key value related to the registration request and storing the data of the DSN in a DSN storing section in response to the registration request for the data of the DSN which is given by the DSN registration requesting section;
a D-CRX registration managing section for carrying out a registration management for classifying the data of the D-CRX for each column to which the key value related to the registration request belongs and storing the data of the D-CRX in the D-CRX storing section in response to the registration request for the data of the D-CRX which is issued by the D-CRX registration requesting section;
a D-CRS registration managing section for carrying out a registration management for classifying the data of the D-CRS every column and storing the data of the D-CRS in the D-CRS storing section in response to the registration request for the data of the D-CRS which is issued by the D-CRS registration requesting section;
a D-RIX registration managing section for carrying out a registration management for classifying the data of the D-RIX every column and storing the data of the D-RIX in the D-RIX storing section in response to the registration request for the data of the D-RIX which is issued by the D-RIX registration requesting section; and
a data manipulation executing section for executing a data manipulation based on a command sent from the master node in parallel by using information stored in the DSN storing section, the D-CRX storing section, the D-CRS storing section and the D-RIX storing section, and
the master node further comprises a processing result integrating section for integrating a processing result executed in parallel by the data manipulation executing sections of the slave nodes.

8. The distributed database system according to claim 2, wherein the DSN generating section, the DSN storage node determining section, the D-CRX generating section, the D-CRX storage node determining section, the D-CRS generating section, the D-CRS storage node determining section, the D-RIX generating section and the D-RIX storage node determining section are provided in the slave nodes.

9. The distributed database system according to claim 1, wherein the NID allocating section allocates NID taking a value of a natural number and an ordinal number to the key value related to the registration request.
